# EUROPÄISCHE PATENTSCHRIFT

(11) **EP 1 686 298 B1**
(45) Veröffentlichungstag und Bekanntmachung des Hinweises auf die Patenterteilung: **06.01.2010**
(21) Anmeldenummer: 06001635.9
(22) Anmeldetag: 26.01.2006
(51) Int. Cl.: F16K 7/12

(54) **Membrane für Membranventil**
Diaphragm for diaphragm valve
Membrane pour vanne à membrane

(30) Priorität: 26.01.2005 DE 202005001250 U
(43) Veröffentlichungstag der Anmeldung: 02.08.2006
(73) Patentinhaber: GEMÜ Gebrüder Müller Apparatebau GmbH & Co. KG, 74653 Ingelfingen (DE)
(72) Erfinder: Müller, Fritz, 74665 Ingelfingen (DE)
(74) Vertreter: Dreiss

(56) Entgegenhaltungen:
- DE-A1- 19 611 664
- FR-A- 1 307 087
- FR-A- 2 056 386
- GB-A- 2 399 616

## Beschreibung

Die Erfindung betrifft eine Membrane für Membraneventile, insbesondere für flüssige Medien, bestehend aus einer Stützmembrane und einem Membraneschild, die an einem zentralen Verbindungsstift gehalten sind, wobei axial zwischen der Stützmembrane und dem Membraneschild ein Versteifungselement angeordnet ist und wobei das Versteifungselement einen axialen Bund aufweist, der die Stützmembrane an ihrem Außenrand umgibt.

Membranen der vorgenannten Art sind z.B. aus der FR-A-2,056,386 bekannt. Sie werden in Membranventilen zum Abdichten insbesondere flüssiger Medien verwendet.

Aufgabe der Erfindung ist es, solche Membranen stabiler zu gestalten.

Erfindungsgemäß wird dies dadurch erreicht, dass das Versteifungselement einen Wulst aufweist, der in eine entsprechende Nut in der Stützmembrane eingreift. Alternativ kann die Stützmembrane zweiteilig ausgebildet ist, dass die Stützmembrane aus einer mit dem zentralen Verbindungsstift verbundenen Innenmembrane und einer Außenmembrane besteht und dass das Versteifungselement einen Wulst aufweist, der sich zwischen der Innenmembrane und einer Außenmembrane befindet.

Das Versteifungselement hat an seiner radial inneren Seite einen Wulst, der in eine entsprechende Nut in der Stützmembrane eingreift und besitzt an seiner radial äußeren Seite einen axialen Bund, der die Stützmembrane an deren Außenseite umschließt. Dieses Versteifungselement besteht vorzugsweise aus einem geeigneten Metall, zum Beispiel aus Stahl.

Beispielsweise Ausführungsformen der Erfindung werden nachfolgend an Hand der Zeichnung erläutert.

In der Zeichnung zeigen:
- Fig. 1: einen Längsschnitt durch eine erfindungsgemäße Membrane;
- Fig. 2: eine perspektivische Ansicht auf die Membrane nach Figur 1 in natürlicher Größe;
- Fig. 3: einen Längsschnitt durch eine weitere Ausführungsform der erfindungsgemäßen Membrane, eingebaut in einen Ventilkörper; und
- Fig.4: die Membrane und den Ventilkörper nach Figur 3 in Explosionsdarstellung.

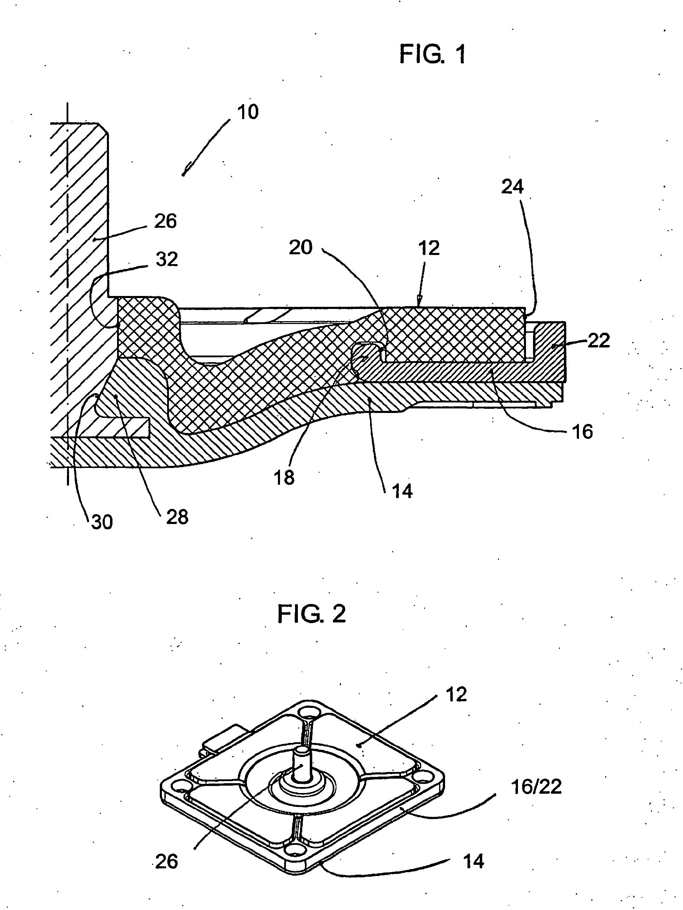

Die allgemein mit 10 bezeichnete Membrane nach Figur 1 besteht aus einer Stützmembrane 12 aus einem geeigneten Elastomer, sowie einem Membranschild 14 aus PFTE, welche die eigentliche Dichtmembrane bildet. Axial zwischen der Stützmembrane 12 und dem Membraneschild 14 ist ein Versteifungselement 16 aus Metall, zum Beispiel aus Stahl, angeordnet. Dieses Versteifungselement 16 ist in Form einer ebenen Platine ausgebildet, die an ihrem radial inneren Ende einen axial vorstehenden Wulst 18, und an ihrem radial äußeren Ende einen axial vorstehenden Bund 22 aufweist. Der Wulst 18 greift in eine entsprechende Nut 20 in der Stützmembrane 12. Der axiale Bund 22 umschließt die Stützmembrane 12 längs ihres äußeren Randes 24.

Beim Zusammenbau wird die Stützmembrane 12 auf das Versteifungselement 16 aufgeklemmt, wobei der Wulst 18 des letzteren in die Nut 20 der Stützmembrane 12 eingreift, wie Figur 1 zeigt.

Der Membranschild 14 ist in seinem Innenbereich mit einer ringförmigen Nase 28 versehen, die in eine entsprechende Ringnut 30 eines Verbindungsstiftes 26 eingerastet ist, wodurch eine formschlüssige Verbindung zwischen dem Membranschild 14 und dem Verbindungsstift 26 gebildet wird. Diese beiden Teile werden dann durch die innere zentrale Bohrung 32 der Stützmembrane 12 von unten her eingeschoben, bis der Membranschild 14 an der Stützmembrane 12 anliegt, wie Figur 1 zeigt.

Die Erfindungsgemäße Membrane gewährleistet die Dichtheit nach außen, da sich die gesamte Presskraft auf die Dichtfläche konzentriert. Die Dichtheit im Ventil wird über den Membranschild 14 aus PTFE erreicht.

Figur 2 zeigt in Schrägansicht eine Draufsicht auf die Membrane nach Figur 1 in natürlicher Größe.

Die Stützmembrane 12 hat bei der dargestellten Ausführungsform etwa die Form eines vierblättrigen Kleeblattes.

Der Wulst 18 kann parallel zum Rand 22 des Versteifungselements 16 verlaufen, oder kreisförmig bzw. kreisbogenförmig ausgebildet sein.

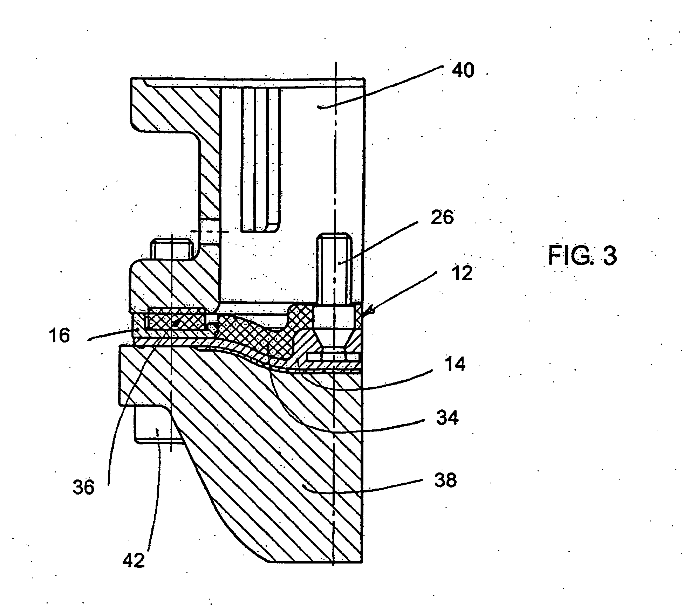

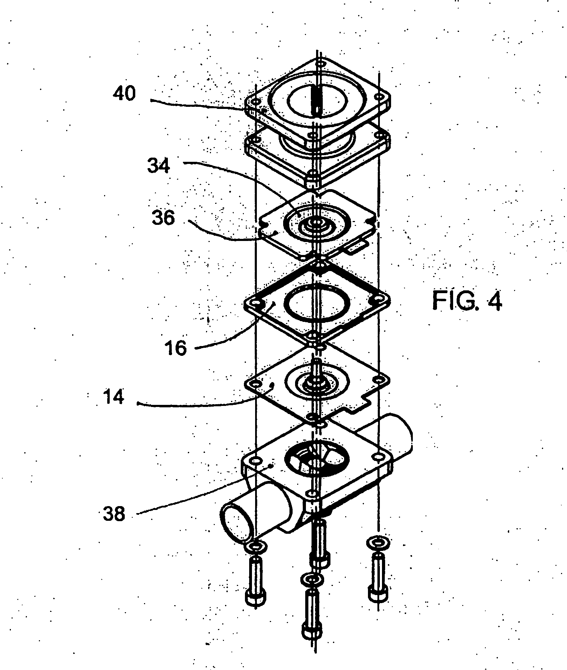

Die Figuren 3 und 4 zeigen eine weitere Ausführungsform der Erfindung, bei der die Stützmembrane 12 zweiteilig ausgebildet ist.

Sie besteht aus einer Innenmembrane 34 und einer von dieser getrennten, separaten Außenmembrane 36. Der Verbindungsstift 26 ist, wie bei der Ausführungsform nach Figur 1, formschlüssig mit dem Membranschild 14 verbunden, und die Innenmembrane 34 ist, wie Figur 3 zeigt, auf den Membranschild 14 aufgesetzt.

Die Außenmembrane 36 kann, wie ebenfalls Figur 3 zeigt, lose von oben her in das Versteifungselement 16 eingelegt sein, oder sie kann mittels Vulkanisierung fest mit dem Versteifungselement 16 verbunden sein.

Bei der Darstellung nach Figur 3 ist die erfindungsgemäße Membrane in ein teilweise dargestelltes Ventil eingebaut, das aus einem Ventilkörper 38 und einem Zwischenstück 14 gebildet ist, wobei die erfindungsgemäße Membrane zwischen-diesen beiden Teilen eingespannt ist, die durch Schrauben 42 miteinander verbunden sind.

Die Außenmembrane 36 bringt dem Ventil die Dichtheit nach außen. Die Innenmembrane 34 ist das bewegliche Teil, das den Membranschild 14 auf den Dichtsteg des Ventilkörpers drückt und die Dichtheit über den Ventilsteg im Ventil gewährleistet.

Hierdurch ergibt sich der Vorteil, daß bei Ersatzbedarf nur die Innenmembrane 34 auszuwechseln ist, da die Außenmembrane 36 nur statisch belastet wird und nur die Flanschdichtung am Ventilkörper bildet.

## Patentansprüche

1. Membrane (10) für Membraneventile, insbesondere für flüssige Medien, bestehend aus einer Stützmembrane (12) und einem Membraneschild (14), die an einem zentralen Verbindungsstift (26) gehalten sind, wobei axial zwischen der Stützmembrane (12) und dem Membraneschild (14) ein Versteifungselement (16) angeordnet ist und wobei das Versteifungselement (16) einen axialen Bund (22) aufweist, der die Stützmembrane (12) an ihrem Außenrand (24) umgibt, **dadurch gekennzeichnet, dass** das Versteifungselement (16) einen Wulst (18) aufweist, der in eine entsprechende Nut (20) in der Stützmembrane (12) eingreift.

2. Membrane nach Anspruch 1, **dadurch gekennzeichnet, dass** das Versteifungselement (16) aus Metall besteht.

3. Membrane nach Anspruch 2, **dadurch gekennzeichnet, dass** das Versteifungselement (16) aus Stahl besteht.

4. Membrane (10) für Membraneventile, insbesondere für flüssige Medien, bestehend aus einer Stützmembrane (12) und einem Membraneschild (14), die an einem zentralen Verbindungsstift (26) gehalten sind, wobei axial zwischen der Stützmembrane (12) und dem Membraneschild (14) ein Versteifungselement (16) angeordnet ist und wobei das Versteifungselement (16) einen axialen Bund (22) aufweist, der die Stützmembrane (12) an ihrem Außenrand (24) umgibt, **dadurch gekennzeichnet, dass** die Stützmembrane (12) zweiteilig ausgebildet ist, dass die Stützmembrane (12) aus einer mit dem zentralen Verbindungsstift (26) verbundenen Innenmembrane (34) und einer Außenmembrane (36) besteht und dass das Versteifungselement (16) einen Wulst (18) aufweist, der sich zwischen der Innenmembrane (34) und einer Außenmembrane (36) befindet.

5. Membrane nach Anspruch 4, **dadurch gekennzeichnet, dass** die Außenmembrane (36) lose auf das Versteifungselement (16) aufgelegt ist.

6. Membrane nach Anspruch 4, **dadurch gekennzeichnet, dass** die Außenmembrane (36) fest mit dem Versteifungselement (16) verbunden ist.

7. Membrane nach Anspruch 6, **dadurch gekennzeichnet, dass** die Außenmembrane (36) mit dem Versteifungselement (16) zusammen vulkanisiert ist.

## Claims

1. A diaphragm (10) for diaphragm valves in particular for liquid fluids, consisting a supporting membrane (12) and a membrane shield (14), supported on a central connection pin (26), wherein a reinforcing element (16) is disposed axially between the supporting membrane (12) and the membrane shield (14) and wherein the reinforcing element (16) has an axial collar (22) surrounding to an outer edge (24) of the supporting membrane (12), **characterized in that** wherein the reinforcing element (16) has a bead (18) for engagement in a groove (20) of the supporting membrane (12).

2. The diaphragm of claim 1, **characterized in that** the reinforcing element (16) is made of metal.

3. The diaphragm of claim 2, **characterized in that** the reinforcing element (16) is made of steel.

4. A diaphragm (10) for diaphragm valves in particular for liquid fluids, consisting a supporting membrane (12) and a membrane shield (14), supported on a central connection pin (26), wherein a reinforcing element (16) is disposed axially between the supporting membrane (12) and the membrane shield (14) and wherein the reinforcing element (16) has an axial collar (22) surrounding to an outer edge (24) of the supporting membrane (12), **characterized in that** the supporting membrane (12) is made of two portions, that supporting membrane (12) includes an inner membrane member (34) connected to the connecting pin (26), and an outer membrane member (36) and that the reinforcing element has a bead (18) disposed between the inner membrane member (34) and the outer membrane member (36).

5. The diaphragm of claim 4, **characterized in that** the outer membrane member (3 6)is placed loosely onto the reinforcing element (16).

6. The diaphragm of claim 4, **characterized in that** the outer membrane member (36) is fixedly secured to the reinforcing element (16).

7. The diaphragm of claim 6, **characterized in that** the outer membrane member (36) and the reinforcing element are (16) jointly vulcanized.

## Revendications

1. Membrane (10) pour vannes à membrane, en particulier pour milieux liquides, constituée d'une membrane d'appui (12) et d'un bouclier de membrane (14) retenus sur une broche de raccordement centrale (26), un élément de renforcement (16) étant disposé axialement entre la membrane d'appui (12) et le bouclier de membrane (14) et l'élément de renforcement (16) comprenant une collerette axiale (22) entourant la membrane d'appui (12) sur le bord extérieur (24) de ladite membrane, **caractérisée en ce que** l'élément de renforcement (16) comprend un bourrelet (18) s'emboîtant dans une rainure (20) correspondante dans la membrane d'appui (12).

2. Membrane selon la revendication 1, **caractérisée en ce que** l'élément de renforcement (16) est constitué de métal.

3. Membrane selon la revendication 2, **caractérisée en ce que** l'élément de renforcement (16) est constitué d'acier.

4. Membrane (10) pour vannes à membrane, en particulier pour milieux liquides, constituée d'une membrane d'appui (12) et d'un bouclier de membrane (14) retenus sur une broche de raccordement centrale (26), un élément de renforcement (16) étant disposé axialement entre la membrane d'appui (12) et le bouclier de membrane (14) et l'élément de renforcement (16) comprenant une collerette axiale (22) entourant la membrane d'appui (12) sur le bord extérieur (24) de ladite membrane, **caractérisée en ce que** la membrane d'appui (12) est conçue en deux parties, **en ce que** la membrane d'appui (12) est constituée d'une membrane intérieure (24) reliée à la broche de raccordement centrale (26) et d'une membrane extérieure (36) et **en ce que** l'élément de renforcement (16) comprend un bourrelet (18) situé entre la membrane intérieure (34) et une membrane extérieure (36).

5. Membrane selon la revendication 4, **caractérisée en ce que** la membrane extérieure (36) est posée de façon lâche sur l'élément de renforcement (16).

6. Membrane selon la revendication 4, **caractérisée en ce que** la membrane extérieure (36) est reliée fermement à l'élément de renforcement (16).

7. Membrane selon la revendication 6, **caractérisée en ce que** la membrane extérieure (36) est vulcanisée conjointement avec l'élément de renforcement (16).
